# EUROPEAN PATENT SPECIFICATION

(11) **EP 0 807 810 B1**
(45) Date of publication and mention of the grant of the patent: **02.11.2000**
(21) Application number: 97302641.2
(22) Date of filing: 17.04.1997
(51) Int. Cl.: G01N 21/35, G01N 21/25

(54) **Vial autosampler**
Automatischer Fläschchenwechsler
Auto-échantillonneur à flacons

(30) Priority: 17.05.1996 GB 9610317
(43) Date of publication of application: 19.11.1997
(73) Proprietor: PFIZER INC., New York, N.Y. 10017-5755 (US); Pfizer Limited, Sandwich Kent CT13 9NJ (GB)
(72) Inventor: Hammond, Stephen Victor, Sandwich, Kent, CT13 9NJ (GB); Axon, Tony Graham, Sandwich, Kent, CT13 9NJ (GB)
(74) Representative: Walters, Frederick James

(56) References cited:
- EP-A- 0 068 717
- EP-A- 0 303 175
- EP-A- 0 388 168
- WO-A-91/08463
- GB-A- 2 292 798
- US-A- 3 322 958

## Description

The present invention relates to spectrophotometric analysis and is particularly concerned with apparatus for analysis of a sample material, typically in powder or liquid form, by reflectance measurements resulting from a beam of electromagnetic radiation (usually near infrared) applied to the material.

Spectrophotometers are well known to provide quantitive and qualitative analysis of substances and materials and are used extensively within the chemical, petro-chemical, food, agriculture and pharmaceutical industries. Typical infrared reflectance spectrophotometers are sold under the Trade Marks "COMPSCAN" by the Gardner Neotec Division of Pacific Scientific and "MODEL 6500" by NIR Systems Inc. Generally known spectrophotometers comprise a cell or container within which a sample of the material for analysis is retained; a source providing a beam of electromagnetic radiation (usually near infrared as previously mentioned) which is applied to the material in the cell, and sensors or detectors which are responsive to reflections from the material in the cell and provide an output from which the analysis is effected. Usually the spectrophotometer is coupled to a computer by which the application of the beam to the material is controlled and which provides a required analysis of the output from the sensors or detectors.

It is an object of the present invention to provide an apparatus for spectrophotometric analysis which is an improvement over known such apparatus in so far as it facilitates effecting individual analysis measurements on sample materials in a plurality of containers.

Patent Specification EP-A-0,388,168 discloses a reflectance spectrophotometer in which test elements are retained by clamping springs between upper and lower supports of a rotor. The rotor is indexed to rotate and introduce the test elements successively to a scanning beam reflection from which provide analysis measurements. This disclosure is believed to be the most relevant to the present invention and provides the basis for the preamble which precedes the characterising clause in Claim 1 hereof.

International Publication WO 91/08463 discloses apparatus for spectrophotometric analysis by reflectance from test slides carried in a rotating turntable and further discloses a computer for controlling operation of the analyzer and indexed rotation of the turntable.

Patent Specification US-A-3,322,958 concerns transmission photospectroscopy in which material samples are accommodated in tubes carried by a rotor. The rotor is indexed to locate each tube successively at a station where the tube is pushed to be displaced into a chamber and its contents subjected to fluorimetric analysis.

### STATEMENT OF INVENTION AND ADVANTAGE

According to the present invention there is provided apparatus for spectrophotometric analysis ofa material by reflectance measurements resulting from a beam of electromagnetic radiation applied to the material which comprises a station at which a container housing the material is to be located for said measurements and means carrying an array of said containers and feeding each container successively to locate it at said station for spectrophotometric measurements and removing the respective container from the station following said measurement; said means for carrying, feeding and removing the array of containers comprising an endless conveyor, intermittent displacement of which feeds each container successively to the station, retains the respective container stationary at the station for spectrophotometric measurement and displaces to remove the respective container from the station following measurement; said station comprising an aperture in a plate that is opaque and substantially non-reflective to the electromagnetic radiation and through which aperture the beam is applied to the material and the reflectance measurements are detected and a seating which coincides with the aperture and to which seating a said container is fed to be accommodated by the seating and retained in a predetermined position overlying the aperture for said measurement, CHARACTERIZED IN THAT each container in the array is a vial having a flat base, a said vial being fed to be accommodated by the seating and retained with its flat base overlying the aperture for said measurement to be taken from the beam applied to, and reflected from, the material through the flat base.

Usually the electromagnetic beam will be visible light or near infrared light and for convenience the latter will hereinafter be referred to.

Conventional spectrophotometers have a scanning station at which a vial of the sample material is located for analysis measurements of that material to be effected. Typically the location of the vial at the station is done by a laboratory technician who subsequently carries out the analysis measurements prior to removing the vial from the station. Where analysis measurements are required on sample material (or materials) in a large number or batch of vials (as is frequently required in the pharmaceutical industry) the above described typical operating procedure can present problems by becoming monotonous (and thereby susceptible to error) and by being slow and labour intensive (and thereby a relatively costly exercise). These problems can be alleviated by the apparatus of the present invention.

Desirably the feed to, and removal of the vials from, the station at which the measurements are taken is effected automatically under computer control, such computer conveniently also being programmed to effect the required spectrophotometric measurements. The means for carrying, feeding and removing the array of vials to/from the station is in the form of an endless or continuous conveyor, preferably a carousel, intermittent displacement of which feeds each vial successively to the station, retains the respective vial stationary at the station for spectrophotometric measurement of its sample contents and following such measurement displaces to remove the respective vial from the station.

The station at which each vial of sample material is to be located has a seating to which a said vial is fed to be accommodated and retained in a predetermined position for analysis measurements to be effected on the sample material. The seating for the container is conveniently provided in the plate havingthe aperture through which the beam is applied to the material.

Conventional spectrophotometers present the light beam on to the sample material for analysis by way of a sheet material window (typically a sheet of optical quartz) which is translucent to the beam and light reflected (in the case of reflectance spectrophotometers) from the sample is redirected through the window to the sensors or detectors (signals from which provide an output for the analysis measurements). With such apparatus it is preferred that the window is disposed between the aforementioned apertured plate and the source of the near infrared light.

The apparatus of the present invention is also provided in combination with an array of vials within which samples of the material for analysis are accommodated (such samples may be of the same or different material). The vial base is preferably located at the seating of the station for the sample material to overlie the above mentioned aperture in the plate and to extend beyond the whole periphery of that aperture. The apertured plate can consequently serve to prevent the light beam which is directed through its aperture from beina applied directly to peripheral parts of the vial base (which could otherwise develop spurious light reflections and adversely affect the accuracy of the spectrophotometric readings). Usually the vial will have its flat base fully overlying the aperture and extending beyond the whole periphery of that aperture so that the light beam is directed through the flat base to the sample material which extends over that flat base. The flat base of the vial is conveniently arranged to abut the apertured plate to overlie the aperture therein. In fact, where the spectrophotometer includes a window as aforementioned, the apertured plate conveniently serves to protect the window from being damaged by the vial (for example by preventing the successive vials in the array from scratching the surface of the window). The seating for a vial when located at the station will usually be sized and profiled to accommodate a predetermined size and shape of vial to locate and retain that vial in a predetermined position over the aperture of the plate. A conventional vial as typically used for housing pharmaceutical samples has a substantially circular flat base and a substantially cylindrical side wall extending concentrically from the base. Preferably a vial from the array of such vials will be located in the seating at the station to ensure that its flat base fully overlies the aperture of the plate whilst the whole periphery of the base (comprising its junction with the cylindrical side wall) is located wholly outside the periphery of the aperture so that the light beam if applied to illuminate the sample material in the vial through the vial base at a position other than through the vial base at its junction with the side wall. The aperture in the plate can consequently serve to define or isolate for the light beam a predetermined target area on the base of the vial remote from the peripheral junction of the base with the vial side wall and over which target area the sample material is dispersed to be subjected to the light beam. It has been determined that should the light beam be applied through the aperture of the plate to illuminate the base of the vial at its peripheral junction with the vial side wall, spurious light reflections and refractions can develop which adversely affect the accuracy of the spectrophotometric readings.

It is preferred that the light beam is directed substantially vertically. The reason for this preference is that when the sample material for analysis is a powder, it permits the powder to be uniformly dispersed over a substantially horizontal base of the vial in which it is housed in the array and through which horizontal base the vertical light beam is applied to the material when a particular vial is located at the station. It will be appreciated however that the present invention may be applied to spectrophotometers in which the light beam is directed other than vertically.

It is to be realised that the apparatus of the present invention may be utilised for analysis of sample material in a form other than powder.

### DRAWINGS

One embodiment of apparatus for spectrophotometric analysis constructed in accordance with the present invention will now be described, by way of example only, with reference to the accompanying illustrative drawings in which:-
Figure 1 diagrammatically illustrates a side elevation of the apparatus for use in the analysis of material samples retained in an array of vials that are fed to the scanning station;
Figure 2 diagrammatically illustrates a plan view of the apparatus in Figure 1 and particularly shows a carousel by which the vials are fed to the scanning station;
Figure 3 is an enlarged side view of part of the apparatus shown in Figure 1 and illustrates the manner in which each vial of the array is presented at the scanning station for analysis of its contents, and
Figure 4 is a similar view to that of Figure 3 and shows a modified form of carousel conveyor.

### DETAILED DESCRIPTION OF DRAWINGS

The apparatus includes a spectrophotometer unit 1 for analysis of a sample material by reflectance measurements from a beam of near infrared light that is applied to the sample. The unit 1 is, conveniently, predominantly comprised of a generally known spectrophotometer unit, for example that as sold under the Trade Mark MODEL 6500 by NIR Systems Inc. Such a known spectrophotometer has a monochromator part 2 which is usually coupled to a computer 3 (not normally regarded as part of the spectrophotometer) from which it receives commands and transmits data back for analysis purposes. The function of the monochromator 2 is well known in the art and includes a generator 4a providing monochromatic near infrared light 4 which it presents through a slit 5. Coupled to the monochromator 2 and forming part of the spectrophotometer is a reflectance module 6 into which the near infrared light 4 is presented from the slit 5. Conventionally included in the module 6 are sensors or detectors 7 which are responsive to near infrared light and when subjected to such light transmit signals to the monochromator 2 and therethrough data to the computer 3 for analysis measurements to be effected. Light 4 from the slit 5 is directed as a beam through a flat quartz sheet window 8 in a base plate 15 of the module 6 onto a sample material for spectrophotometric analysis located at a scanning station 20. The plate 15 is opaque and non-reflective to near infrared light. This sample material is housed in a vial 16 which is located adjacent to the window 8 externally of the module 6 so that light reflected from the sample material re-enters the module 6 through the window 8 to be picked up by the detectors 7 for effecting the analysis.

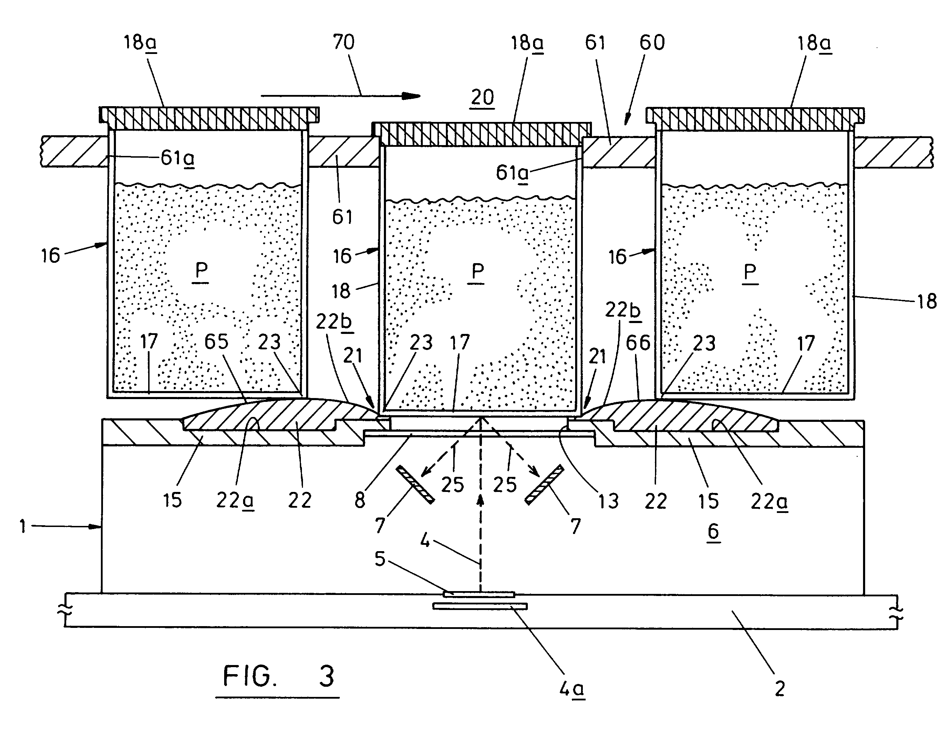

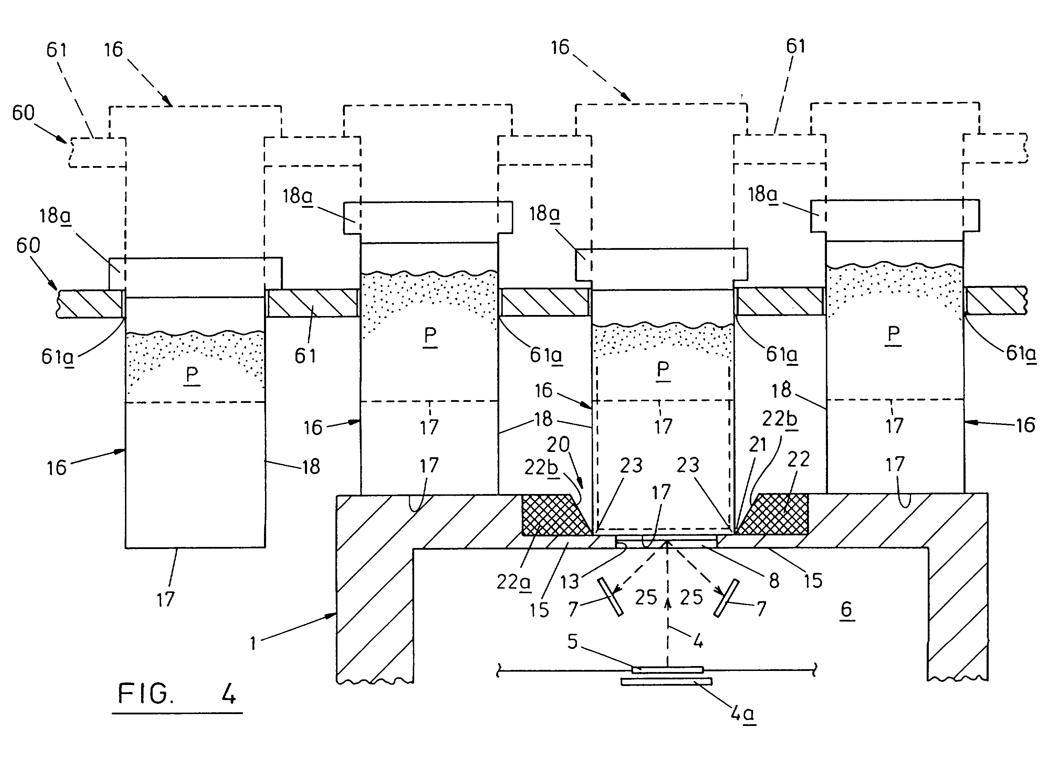

The apparatus shown is primarily intended for spectrophotometric analysis of pharmaceutical samples where a sample may be available only in a small quantity. Such samples P in powder form are housed within conventional pharmaceutical thin walled glass vials 16 each having a flat circular base 17 and an open topped cylindrical side wall 18 upstanding from the base to be concentric therewith and closed by a cap or stopper 18a. A vial 16 is located at the scanning station 20 on the module 6 so that its circular base 17 fully overlies a circular aperture 13 in the plate 15 which aperture is bridged by the window 8. For the purpose of locating a vial 16 correctly for analysis measurements its base stands on the plate 15 slidably accommodated in a complementary annular seating 21 presented on the base plate 15 adjacent to its aperture 13. From Figure 3 it will be seen that the diameter of the aperture 13 is considerably less than the diameter of the vial base 17 and is also less than the internal diameter of the vial at its base 17. Consequently when the vial base 17 is located on the seating 21 to be concentric with the aperture 13, the marginal periphery of the vial base which includes the junction between that base and the side wall 18 (which junction is illustrated at 23 in Figures 3 and 4) does not overlie the aperture 13 and is therefore remote from the incident beam 4. A conventional pharmaceutical vial will have a base diameter not greater than 20 millimetres and a thickness for its cylindrical wall not greater than 2 millimetres, typically the vial base diameter will be 15 millimetres, the cylindrical wall thickness will be 0.5 millimetres and the vial will have a capacity in the order of 4.0 ccs. With such a typical vial the aperture 13 may have a diameter of, say, 12 millimetres.

The beam 4 is directed substantially vertically and the plate 15 is disposed in a horizontal plane. A vial 16 located at the station 20 with its base 17 horizontal and standing on the plate 15 in the seating 21 will have its sample powder P dispersed uniformly on the vial base 17 to extend fully over and beyond the whole periphery of the aperture 13. As a consequence the beam 4 directed through the aperture 13 will be applied to the powder P for light 25 reflected therefrom to be applied to the detectors 7 for spectrophotometric analysis in conventional manner. In particular, it will be noted that the periphery of the vial base which includes the junction 23 between that base and the cylindrical side wall 18 is covered by the base plate 15 to the extent that the base plate prevents light from being applied directly to the junction 23 from the beam 4. This alleviates spurious or stray light reflections which could otherwise emanate from the wall/base junction 23 of the vial from adversely affecting the accuracy of the spectrophotometric measurements.

The annular seating 21 is conveniently defined on the base plate 15 by an annular seating plate 22 located in an annular recess 22a in the plate 15. It will be appreciated that different seating plates 22 can be applied to the plate 15 (such different seating plates having different diameter seatings 21 for accommodating and locating differently sized vials 16). Also by having the seating plate 22 removable, a reference standard material (for example "Spectralon" - Trade Mark) may be fitted directly over the aperture 13 for the purpose of providing a standard approximately 99% reflective surface to the near infrared light from the beam 4 in setting up the spectrophotometer prior to carrying out an analysis measurement. The seating plate 22 presents a substantially frusto conical guide surface 22b which is concentric with the aperture 13 and converges to the seating 21. The guide surface 22b provides a lead-in over which a vial may slide to assist in location of the base 17 of the vial concentrically on the seating 21.

It will be seen from Figure 3 that the base 17 of a vial 16 in the seating 21 at the station 20 stands on and is in face-to-face contact with the base plate 15 so that the beam 4 immediately enters the base of the vial from the aperture 13. Furthermore, the base plate 15 (which will usually be formed of metal) serves to protect the outer surface of the window 8 from being damaged, for example scratched, by contact with the vial base.

Vials 16 from an array thereof and each containing sample material P are fed successively and automatically to the scanning station 20 for spectrophotometric analysis of the respective samples and removed from the station following such measurement. For this purpose the apparatus includes an endless conveyor which, in the present example, is in the form of a carousel 60 comprising a substantially horizontal circular disc 61 centrally mounted for rotation on a vertical shaft 62 which is coupled to be rotated by a drive unit 63.

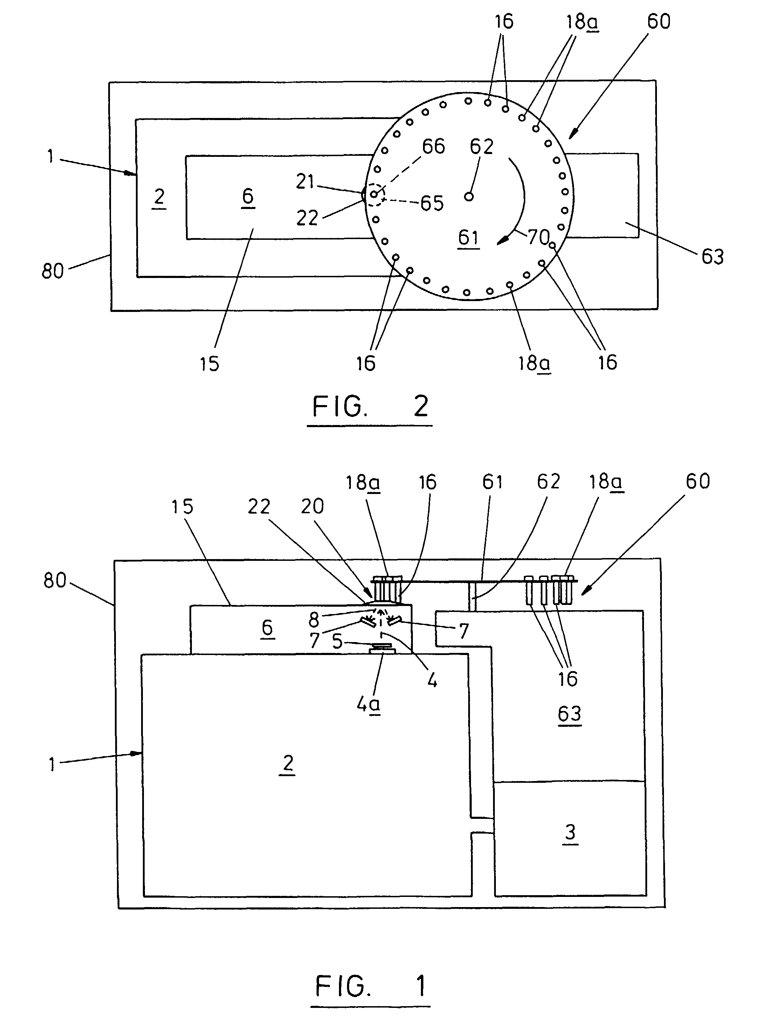

The vials 16 containing the samples for analysis are disposed in a circumferentially spaced array at the marginal peripheral edge part of the disc 61 (as best seen in Figure 2). Each vial is received as a free sliding fit in an aperture 61a in the disc 16 and is suspended from the disc by abutment of its cap 18a with the upper surface of the disc. For convenience not all of the suspended vials 16 have been shown in Figure 1. The drive unit 63 is controlled automatically by the computer 3 in synchronisation with actuation of the spectrophotometer 1 to rotate the shaft 62 and thereby index the disc 61 intermittently to feed the vials 16 successively to the annular vial seating 21 on the plate 15. In the embodiment shown in Figure 3 the seating 21 is disposed between ramps 65 and 66 presented by upper substantially diametrically opposed convex surface parts on the annular seating plate 22 carried by the base plate 15. The ramps 65 and 66 are located beneath the circular path along which the vials are carried by the rotating carousel and lead and trail respectively relative to the direction of movement of the vials during rotation of the disc 61 (in the direction of arrow 70). The ramps 65 and 66 are conveniently coated with a low friction material (such as polytetrafluoroethylene) and are arranged together with the vials on the carousel so that as the disc 61 is rotated, the base 17 of a vial approaching the station 20 will abut and slide over the leading ramp 65 causing that vial to be displaced vertically upwardly relative to the disc 61 so that it is no longer suspended by its cap 18a from that disc. Further rotation of the carousel displaces the vial from the leading ramp 65 and down the frusto conical guide surface 22b to the seating 21 so that the vial is displaced downwardly under gravity to stand on the plate 15 in the seating 21 which determines the location of the vial base 17 concentric with the aperture 13. In this condition of the vial and with the carousel stationary, the spectrophotometer is actuated by the computer control to effect the analysis measurements. Following such measurements the disc 61 is further rotated to urge the vial 16 on the seating 21 into abutment with the guide surface 22b leading to the trailing ramp 66. The surface 22b to the ramp 66 causes the vial to be raised from the seating 21 and as the vial slides over that ramp clear of the station 20, it eventually drops relative to the disc 61 to be suspended therefrom by its cap 18a. The automatic intermittent rotation of the disc 61 under control of the computer 3 ensures that the feed or indexing of the vials 16 to the seating 21 is synchronised with the analysis measurements which are effected on the vial that is stationary on the seating 21.

In the modification shown in Figure 4 the disc 61 of the carousel 60 rotates about its vertical axis to index the suspended vials 16 in a relatively high plane (as indicated by the broken lines in the Figure). When a particular vial has been indexed to a position in which it directly overlies the seating 21, the disc 61 is displaced vertically downwardly along its axis of rotation to a low plane to deposit that particular vial 16 on the seating 21 (as indicated by the full lines in Figure 4). As the disc 61 is lowered for the vial 16 to stand directly on the plate 15 in the seating 21, the cap of that vial may be moved clear of the disc 61 (by the vial's abutment with the plate 15) whilst the vial remains retained in the aperture 61a so that the vial stands alone on the seating, possibly being centralised on the seating 21 by the frusto conical guide surface 22b. It will be seen from Figure 4 that during lowering of the disc 61, the two vials 16 which are adjacent to and on each side of the vial 16 that is in the seating 21 abut the unit 1 to be raised relative to the disc 61 but this is incidental. With the disc 61 in the low plane and the carousel stationary, the spectrophotometer is actuated by the computer control to effect the analysis measurements of the powder in the vial on the seating. Thereafter the disc 61 is raised to its high plane, again to suspend therefrom all of the vials 16 which it carries so that they are clear of the unit 1 and the disc 61 can then be rotatably indexed to locate a further vial 16 over the seating 21.

The drive unit 63 for rotatably indexing the vials 16 on the carousel will typically have an electrical stepper motor controlled by optical switches which determine the desired stop motion positions to locate a selected vial over the seating 21 under computer control. In the modification of Figure 4, vertical displacement of the rotation shaft 62 for the disc 61 to move the disc between its high and low planes whilst indexing is conveniently effected by a further electrical drive motor controlled by limit switches.

Desirably the station 20 together with the carousel and vials 16 carried thereby are enclosed within an opaque cover 80.

## Claims

1. Apparatus for spectrophotometric analysis of a material (P) by reflectance measurements resulting from a beam (4) of electromagnetic radiation applied to the material (P) which comprises a station (20) at which a container (16) housing the material (P) is to be located for said measurements and means (61) carrying an array of said containers (16) and feeding each container successively to locate it at said station (20) for spectrophotometric measurements and removing the respective container (16) from the station (20) following said measurement; said means for carrying, feeding and removing the array of containers (16) comprising an endless conveyor (61), intermittent displacement of which feeds each container (16) successively to the station (20), retains the respective container (16) stationary at the station for spectrophotometric measurement and displaces to remove the respective container from the station (20) following measurement; said station (20) comprising an aperture (13) in a plate (15) that is opaque and substantially non-reflective to the electromagnetic radiation and through which aperture (13) the beam (4) is applied to the material and the reflectance measurements (25) are detected and a seating (21) which coincides with the aperture (13) and to which seating a said container (16) is fed to be accommodated by the seating (21) and retained in a predetermined position overlying the aperture (13) for said measurement, CHARACTERIZED IN THAT each container in the array is a vial (16) having a flat base (17), a said vial (16) being fed to be accommodated by the seating (21) and retained with its flat base (12) overlying the aperture (13) for said measurement to be taken from the beam (4) applied to, and reflected from, the material (P) through the flat base (17).

2. Apparatus as claimed in Claim 1 in which said seating (21) is carried by said plate (15).

3. Apparatus as claimed in either Claim 1 or Claim 2 in which a sheet material window (8) translucent to said beam (4) is disposed between the seating (21) and a source (4a) for said beam, for said beam to be directed through the window (8) to the material housed in the vial (16).

4. Apparatus as claimed in any one of the preceding claims in which the feed and removal of the vials (16) is controlled automatically by a computer (3) programmed to effect said spectrophotometric measurement.

5. Apparatus as claimed in any one of the preceding claims in which the conveyor comprises a carousel (60) intermittently rotatable to effect said displacement.

6. Apparatus as claimed in Claim 5 in which the carousel (60) is intermittently rotatable about an upstanding axis (62) and is indexible for locating a predetermined vial (16) over said seating (21) and is displaceable in the direction of its axis of rotation to lower the predetermined vial (16) on to the seating (21) for said measurement and to raise the predetermined vial from the seating for further indexing of the vials (16).

7. Apparatus as claimed in either Claim 5 or Claim 6 in which the carousel (60) comprises a rotatable disc (61) from which said vials (16) are to be suspended to be carried thereby in an array spaced about the periphery of the disc (61).

8. Apparatus as claimed in any one of the preceding claims and comprising an opaque cover (80) enclosing the station (20) together with the means (61) for carrying the array of vials (16).

9. Apparatus as claimed in any one of the preceding claims and comprising a guide surface (22b) associated with said seating (21) and with which a vial (16) on the conveyor (61) may abut, the guide surface (65) serving to provide a lead-in for the vial (16) as it is fed to the seating to assist in location of the vial at the seating (21).

10. Apparatus as claimed in any one of the preceding claims in which said carrying, feed and removal means locates a vial at the station (20) for the material (P) in the vial and dispersed over the flat base (17) thereof to fully overlie the aperture (13) in the plate (15) and extend beyond the periphery of that aperture (13).

11. Apparatus as claimed in Claim 10 in which the base (17) is in abutment with the plate (15) to overlie the aperture (13) therein.

12. Apparatus as claimed in Claim 11 when appendant to Claim 3 in which the plate (15) protects the window (8) from abutment by the vial (16).

13. Apparatus as claimed in any one of the preceding claims in which each vial (16) has its flat base (17) substantially circular and has a substantially cylindrical side wall (18) extending concentrically from said base.

14. Apparatus as claimed in Claim 13 in which the seating (21) is circular for the circular base (17) of the vial to be received thereby as a substantially complementary fit.

15. Apparatus as claimed in either Claim 13 or Claim 14 in which the base (17) of a said vial (16) accommodated by the seating (21) fully overlies the aperture (13) of the plate so that the periphery of the base (17) comprising its junction with the cylindrical side wall (18) is located wholly outside the periphery of the aperture (13) of the plate and the beam is applied to the material in the vial through the vial base other than at a position through the vial base (17) at its junction (23) with the side wall.

16. Apparatus as claimed in any one of Claims 13 to 15 in which the vial has a base (17) diameter not greater than 20 millimeters and a wall thickness not greater than 2 millimeters.

17. Apparatus as claimed in any one of Claims 13 to 16 in which the circular base (17) of a vial (16) accommodated by the seating (21) is substantially concentric with the aperture (13) in the plate.

18. Apparatus as claimed in any one of Claims 13 to 17 when appendant to Claim 9 in which the guide surface (22b) is substantially frusto conical and converges to the seating (21) to provide a lead-in for the circular base (17) of a vial (16) to that seating.

19. Apparatus as claimed in any one of the preceding claims in which the beam (4) is directed substantially vertically.

20. Apparatus as claimed in Claim 19 in which the station (20) is directed upwardly and the vials (16) are carried by the conveyor (61) over the station and each vial is controlled to be deposited downwardly onto the station (20) for the spectrophotometric measurements and raised from said station (20) subsequent to said measurements.

## Patentansprüche

1. Vorrichtung zur spektrofotometrischen Analyse eines Materials (P) durch Messungen des Reflexionsvermögens, die sich daraus ergeben, dass dem Material (P) ein Strahl (4) elektromagnetischer Strahlung zugeführt wird, welche Vorrichtung umfasst: eine Station (20), an der ein das Material (P) beherbergender Behälter (16) für die besagten Messungen positioniert werden soll, und eine Einrichtung (61), die eine Anordnung der besagten Behälter (16) trägt und jeden Behälter nacheinander zuführt, um ihn für spektrofotometrische Messungen an der besagten Station (20) zu positionieren, und den jeweiligen Behälter (16) im Anschluss an die besagte Messung aus der Station (20) entfernt; wobei die Einrichtung zum Tragen, Zuführen und Entfernen der Anordnung von Behältern (16) einen Endlosförderer (61) umfasst, dessen intermittierende Bewegung jeden Behälter (16) nacheinander zu der Station (20) zuführt, den jeueiligen Behälter (16) für eine spektrofotometrische Messung an der Station stationär festhält und sich verlagert, um den jeweiligen Behälter in Anschluss an die Messung aus der station (20) zu entfernen; wobei die besagte Station (20) eine Öffnung (13) in einer Platte (15) umfasst, die für die elektromagnetische Strahlung optisch dicht und im Wesentlichen nicht-reflektierend ist, und durch welche Öffnung (13) der Strahl (4) zu dem Material zugeführt wird und die Messwerte (25) des Reflexionsvermögens erfasst werden, sowie einen Sitz (21), der mit der Öffnung (13) übereinstimmt und welchem Sitz ein besagter Behälter (16) zugeführt wird, um vom Sitz (21) aufgenommen und für die besagte Messung in einer vorbestimmten, über der Öffnung (13) liegenden Position festgehalten zu werden, DADURCH GEKENNZEICHNET, DASS jeder Behälter in der Anordnung ein Fläschchen (16) mit einem ebenen Boden (17) ist, wobei ein besagtes Fläschchen (16) zugeführt wird, um es mit seinem ebenen Boden (12) über der Öffnung (13) liegend durch den Sitz (21) aufzunehmen und festzuhalten, damit der Messwert aus dem Strahl (4) genommen werden kann, der durch den ebenen Boden (17) zu dem Material (P) zugeführt und aus diesem reflektiert wird.

2. Vorrichtung nach Anspruch 1, bei welcher der Sitz (21) von der besagten Platte (15) getragen wird.

3. Vorrichtung nach Anspruch 1 oder Anspruch 2, bei welcher ein für den besagten Strahl (4) durchlässiges Schichtmaterialfenster (8) zwischen dem Sitz (21) und einer Quelle (4a) für den besagten Strahl angeordnet ist, damit der besagte Strahl durch das Fenster (8) zu dem im Fläschchen (16) untergebrachten Material gelenkt werden kann.

4. Vorrichtung nach einem der vorangehenden Ansprüche, bei welcher das Zuführen und Entfernen der Fläschchen (16) automatisch von einem Computer (3) gesteuert wird, der programmiert ist, um die spektrofotometrische Messung durchzuführen.

5. Vorrichtung nach einem der vorangehenden Ansprüche, bei welcher der Förderer ein Karussell (60) umfasst, das intermittierend drehbar ist, um die besagte Bewegung zu vollziehen.

6. Vorrichtung nach Anspruch 5, bei welcher das Karussell (60) um eine aufrechte Achse (62) intermittierend drehbar ist und schaltbar ist, um ein vorbestimmtes Fläschchen (16) über dem besagten Sitz (21) zu positionieren, und in Richtung seiner Drehachse verlagerbar ist, um das vorbestimmte Fläschchen (16) für die besagte Messung auf den Sitz (21) abzusenken und um das vorbestimmte Fläschchen für ein Weiterschalten der Fläschchen (16) aus dem Sitz anzuheben.

7. Vorrichtung nach Anspruch 5 oder Anspruch 6, bei welcher das Karussell (60) eine drehbare Scheibe (61) umfasst, an der die besagten Fläschchen (16) aufgehängt werden sollen, um sie durch diese in einer Anordnung im Abstand um den Umfang der Scheibe (16) herum zu tragen.

8. Vorrichtung nach einem der vorangehenden Ansprüche und umfassend eine optisch dichte Abdeckung (80), welche die Station (20) zusammen mit der Einrichtung (61) zum Tragen der Anordnung von Fläschchen (16) umschließt.

9. Vorrichtung nach einem der vorangehenden Ansprüche und umfassend eine Führungsfläche (22b), die zu dem besagten Sitz (21) zugehörig ist und mit der ein Fläschchen (16) auf dem Förderer (61) in Anschlag treten kann, wobei die Führungsfläche (65) dazu dient, eine Einfädelung für das Fläschchen (16) bereitzustellen, während es zu dem Sitz zugeführt wird, um die Positionierung des Fläschchens am Sitz (21) zu unterstützen.

10. Vorrichtung nach einem der vorangehenden Ansprüche, bei welcher die besagte Trag-, Zuführ- und EntfernungsEinrichtung ein Fläschchen an der Station (20) positioniert, damit das Material (P) im Fläschchen und über dessen ebenen Boden (17) verteilt vollständig über der Öffnung (13) in der Platte (15) liegt und sich über den Umfang dieser Öffnung (13) hinaus erstreckt.

11. Vorrichtung nach Anspruch 10, bei welcher sich der Boden (17) im Anschlag mit der Platte (15) befindet, um über der Öffnung (13) darin zu liegen.

12. Vorrichtung nach Anspruch 11, bei Rückbeziehung auf Anspruch 3, bei welcher die Platte (15) das Fenster (8) vor einem Anschlagen des Fläschchens (16) schützt.

13. Vorrichtung nach einem der vorangehenden Ansprüche, bei welcher jedes Fläschchen (16) seinen ebenen Boden (17) im Wesentlichen kreisförmig aufweist und eine sich konzentrisch aus dem besagten Boden erstreckende im Wesentlichen zylindrische Seitenwand (18) aufweist.

14. Vorrichtung nach Anspruch 13, bei welcher der Sitz (21) kreisförmig ist, um den kreisförmigen Boden (17) des Fläschchens dadurch in einer im Wesentlichen komplementären Passung aufzunehmen.

15. Vorrichtung nach Anspruch 13 oder 14, bei welcher der Boden (17) eines vom Sitz (21) aufgenommenen besagten Fläschchens (17) voll über der Öffnung (13) der Platte liegt, so dass der Rand des Bodens (17) umfassend seine Verbindungsstelle mit der zylindrischen Seitenwand (18) vollständig außerhalb des Umfangs der Öffnung (13) der Platte angeordnet ist, und der Strahl zu dem Material im Fläschchen durch den Fläschchenboden anders als an einer Position durch den Fläschchenboden (17) an seiner Verbindungsstelle (23) mit der Seitenwand zugeführt wird.

16. Vorrichtung nach einem der Ansprüche 13 bis 15, bei welcher das Fläschchen einen Boden(17)durchmesser von nicht mehr als 20 Millimeter und eine Wanddicke von nicht mehr als 2 Millimeter aufweist.

17. Vorrichtung nach einem der Ansprüche 13 bis 16, bei welcher der kreisförmige Boden (17) eines vom Sitz (21) aufgenommenen Fläschchens (16) mit der Öffnung (13) in der Platte im Wesentlichen konzentrisch ist.

18. Vorrichtung nach einem der Ansprüche 13 bis 17, bei Rückbeziehung auf Anspruch 9, bei welcher die Führungsfläche (22b) im Wesentlichen kegelstumpfförmig ist und zum Sitz (21) hin konvergiert, um eine Einfädelung für den kreisförmigen Boden (17) eines Fläschchens (16) zu diesem Sitz bereitzustellen.

19. Vorrichtung nach einem der vorangehenden Ansprüche, bei welcher der Strahl (4) im Wesentlichen vertikal gerichtet ist.

20. Vorrichtung nach Anspruch 19, bei welcher die Station (20) nach oben gerichtet ist, und die Fläschchen (16) vom Förderer (61) über die Station getragen werden, und jedes Fläschchen gesteuert wird, um es für die spektrofotometrischen Messungen nach unten zu auf die Station (20) abzusetzen und es anschließend an die besagten Messungen aus der besagten Station (20) anzuheben.

## Revendications

1. Appareil pour l'analyse spectrophotométrique d'une matière (P) par des mesures de réflectance résultant d'un faisceau (4) d'un rayonnement électromagnétique appliqué à la matière (P), qui comporte un poste (20) dans lequel un récipient (16) contenant la matière (P) doit être placé pour lesdites mesures et un moyen (61) portant une rangée desdits récipients (16) et faisant avancer successivement chaque récipient pour le placer dans ledit poste (20) à des fins de mesures spectrophotométriques et enlevant le récipient respectif (16) du poste (20) à la suite de ladite mesure ; ledit moyen destiné à porter, faire avancer et enlever la rangée de récipients (16) comportant un transporteur sans fin (61) dont un déplacement intermittent fait avancer successivement chaque récipient (16) jusqu'au poste (20), retient le récipient respectif (16) immobile dans le poste pendant une mesure spectrophotométrique et se déplace pour enlever le récipient respectif du poste (20) à la suite d'une mesure ; ledit poste (20) présentant une ouverture (13) dans une plaque (15) qui est opaque et ne réfléchit sensiblement pas le rayonnement électromagnétique, ouverture (13) à travers laquelle le faisceau (4) est appliqué à la matière et les mesures de réflectance (25) sont détectées, et un siège (21) qui coïncide avec l'ouverture (13) et jusqu'auquel l'un desdits récipients (16) est avancé pour être logé par le siège (21) et retenu dans une position prédéterminée s'étendant au-dessus de l'ouverture (13) pendant ladite mesure, caractérisé en ce que chaque récipient de la rangée est un flacon (16) ayant une base plate (17), ledit flacon (16) étant avancé pour être logé par le siège (21) et retenu avec sa base plate (12) s'étendant au-dessus de l'ouverture (13) pendant ladite mesure devant être prise à partir du faisceau (4) appliqué à, et réfléchi de, la matière (P) à travers la base plate (17).

2. Appareil selon la revendication 1, dans lequel ledit siège (21) est porté par ladite plaque (15).

3. Appareil ,selon la revendication 1 ou la revendication 2, dans lequel une fenêtre (8) de matière en feuille translucide pour ledit faisceau (4) est disposée entre le siège (21) et une source (4a) pour ledit faisceau, pour que ledit faisceau soit dirigé à travers la fenêtre (8) vers la matière logée dans le flacon (16).

4. Appareil selon l'une quelconque des revendications précédentes, dans lequel l'avance et l'enlèvement des flacons (16) sont commandés automatiquement par un calculateur (3) programmé pour effectuer ladite mesure spectrophotométrique.

5. Appareil selon l'une quelconque des revendications précédentes, dans lequel le transporteur comporte un carrousel (60) pouvant être mis en rotation par intermittence pour effectuer ledit déplacement.

6. Appareil selon la revendication 5, dans lequel le carrousel (60) peut être mis en rotation par intermittence autour d'un axe droit (62) et peut être indexé pour placer un flacon prédéterminé (16) au-dessus dudit siège (21) et peut être déplacé dans la direction de son axe de rotation pour faire descendre le flacon prédéterminé (16) jusque sur le siège (21) pendant ladite mesure et pour élever le flacon prédéterminé à partir du siège pour un indexage supplémentaire des flacons (16).

7. Appareil selon la revendication 5 ou la revendication 6, dans lequel le carrousel (60) comporte un disque rotatif (61) auquel lesdits flacons (16) sont destinés à être suspendus pour être ainsi portés en une rangée espacée le long de la périphérie du disque (61).

8. Appareil selon l'une quelconque des revendications précédentes et comportant un capot opaque (80) renfermant le poste (20) en même temps que le moyen (61) destiné à porter la rangée de flacons (16).

9. Appareil selon l'une quelconque des revendications précédentes et présentant une surface de guidage (22b) associée audit siège (21) et contre laquelle un flacon (16) situé sur le transporteur (61) peut prendre appui, la surface de guidage (65) servant à former une entrée pour le flacon (16) pendant qu'il est avancé vers le siège afin d'aider à la mise en place du flacon sur le siège (21).

10. Appareil selon l'une quelconque des revendications précédentes, dans lequel ledit moyen de transport, d'avance et d'enlèvement place un flacon dans le poste (20) afin que la matière (P) se trouvant dans le flacon et dispersée au-dessus de la base plate (17) de celui-ci recouvre totalement l'ouverture (13) dans la plaque (15) et s'étende au-delà de la périphérie de cette ouverture (13).

11. Appareil selon la revendication 10, dans lequel la base (17) est en appui contre la plaque (15) afin de s'étendre au-dessus de l'ouverture (13) de celle-ci.

12. Appareil selon la revendication 11 lorsqu'elle dépend de la revendication 3, dans lequel la plaque (15) protège la fenêtre (8) contre l'arrivée en appui du flacon (16) .

13. Appareil selon l'une quelconque des revendications précédentes, dans lequel chaque flacon (16) a sa base plate (17) sensiblement circulaire et comporte une paroi latérale sensiblement cylindrique (18) s'étendant concentriquement depuis ladite base.

14. Appareil selon la revendication 13, dans lequel le siège (21) est circulaire de façon à recevoir en un ajustement sensiblement complémentaire la base circulaire (17) du flacon.

15. Appareil selon la revendication 13 ou la revendication 14, dans lequel la base (17) d'un flacon (16) logé par le siège (21) recouvre complètement l'ouverture (13) de la plaque afin que la périphérie de la base (17) comprenant sa jonction avec la paroi latérale cylindrique (18) soit placée entièrement à l'extérieur de la périphérie de l'ouverture (13) de la plaque et que le faisceau soit appliqué à la matière dans le flacon à travers la base du flacon ailleurs que dans une position à travers la base (17) du flacon à sa jonction (23) avec la paroi latérale.

16. Appareil selon l'une quelconque des revendications 13 à 15, dans lequel le flacon présente un diamètre de base (17) non supérieur à 20 mm et une épaisseur de paroi non supérieure à 2 mm.

17. Appareil selon l'une quelconque des revendications 13 à 16, dans lequel la base circulaire (17) d'un flacon (16) logé par le siège (21) est sensiblement concentrique avec l'ouverture (13) dans la plaque.

18. Appareil selon l'une quelconque des revendications 13 à 17 en dépendance de la revendication 9, dans lequel la surface de guidage (22b) est sensiblement tronconique et converge vers le siège (21) pour former une entrée pour la base circulaire (17) d'un flacon (16) vers ce siège.

19. Appareil selon l'une quelconque des revendications précédentes, dans lequel le faisceau (4) est dirigé sensiblement verticalement.

20. Appareil selon la revendication 19, dans lequel le poste (20) est orienté vers le haut et les flacons (16) sont transportés par le transporteur (61) au-dessus du poste et chaque flacon est commandé de façon à être déposé en descendant jusque sur le poste (20) pour les mesures spectrophotométriques et à être élevé à partir dudit poste (20) après lesdites mesures.
